# FASCICULE DE BREVET EUROPEEN

(11) **EP 1 937 600 B1**
(45) Date de publication et mention de la délivrance du brevet: **29.09.2010**
(21) Numéro de dépôt: 06808079.5
(22) Date de dépôt: 06.09.2006
(51) Int. Cl.: C02F 1/52, B01D 61/16, B01D 21/00

(54) **APPAREIL DE CLARIFICATION DES EAUX ET PROCEDE DE MISE EN OEUVRE**
WASSERKLÄRVORRICHTUNG UND IMPLEMENTIERUNGSVERFAHREN
WATER CLARIFYING APPARATUS AND IMPLEMENTING METHOD

(30) Priorité: 09.09.2005 FR 0509236
(43) Date de publication de la demande: 02.07.2008
(73) Titulaire: DEGREMONT, 92500 Rueil-Malmaison (FR)
(72) Inventeur: BONNELYE, Véronique, F-78700 Conflans Sainte Honorine (FR); MOLES, Jacques, F-92500 Rueil Malmaison (FR)
(74) Mandataire: Michardière, Bernard
(86) Numéro de dépôt international: PCT/FR2006/002052
(87) Numéro de publication internationale: WO 2007/028894

(56) Documents cités:
- WO-A-03/095371
- DE-A1-102004 004 180
- US-A1- 2004 217 058
- PATENT ABSTRACTS OF JAPAN vol. 2003, no. 12, 5 décembre 2003 (2003-12-05) -& JP 2005 046684 A (TORAY IND INC), 24 février 2005 (2005-02-24)
- PATENT ABSTRACTS OF JAPAN vol. 2000, no. 02, 29 février 2000 (2000-02-29) & JP 11 319511 A (MATSUSHITA ELECTRIC WORKS LTD), 24 novembre 1999 (1999-11-24)

## Description

La présente invention est relative à un dispositif de clarification des eaux comprenant une zone de flottation, une zone de filtration membranaire et des moyens d'extraction, la zone de flottation et la zone de filtration membranaire possédant une paroi de séparation commune.

Les eaux traitées avant rejet en milieu naturel, destinées à la consommation ou à être utilisées dans des installations peuvent contenir des matières en suspension (particules, algues, bactéries...) et des matières dissoutes (matières organiques, micro polluants...) et présenter des caractéristiques très variables de qualités, typiquement turbidité de 0.1 à 200 NTU, température de 0.5°C à 50°C. Ces eaux nécessitent un traitement de clarification.

Il existe plusieurs types de clarification, notamment la flottation à air dissous, la filtration sur membranes et des combinaisons décantation/filtration sur membrane ou flottation/filtration sur membrane.

La flottation à air dissous, souvent appelée DAF, est un des traitements de clarification utilisé pour la clarification des eaux en vue de la production d'eau potable, d'eau de procédé et dans les filières de dépollution des eaux résiduaires. Elle comporte généralement une association de différentes étapes :
- une coagulation afin de neutraliser les charges de surface des colloïdes, et l'adsorption de matières dissoutes,
- une floculation permettant l'agglomération des particules,
- une injection d'eau pressurisée permettant la mise en contact des micro bulles générées par la détente et de l'eau floculée,
- une séparation permettant la séparation du floc et de l'eau clarifiée,
- une collecte de l'eau clarifiée, et
- une collecte des « boues » flottées.

La technologie de flottation a fait l'objet de nombreuses améliorations, par exemple la flottation turbulente (brevet US 5.516.433) qui met en oeuvre, à la base de la zone de flottation, des éléments de contrôle et de répartition du débit permettant d'obtenir en amont de ces éléments un débit non uniforme, ce phénomène engendrant une circulation interne objet du brevet cité ci-dessus.

Cette technologie de flottation à l'air dissous, bien qu'optimisée, n'a pas un rendement de 100% sur l'élimination des particules et des matières coagulées et nécessite, dans tous les cas, une filtration permettant de séparer de l'eau clarifiée le résiduel de floc non retenu dans le système de flottation.

La clarification par filtration sur membranes met en oeuvre des membranes de filtration, ultrafiltration et microfiltration, qui sont caractérisées par un seuil de coupure permettant de délimiter une barrière physique, jouant le rôle d'un véritable tamis. Suivant leurs caractéristiques de géométrie et de seuil de coupure, les membranes d'ultrafiltration (UF) et de microfiltration (MF) sont particulièrement bien adaptées à la clarification des eaux qui contiennent des particules telles que les matières en suspension, les microorganismes... Les limites de l'application des membranes en clarification des eaux sont de deux types :
- une élimination faible des composés dissous, des matières organiques et des molécules dont la taille est plus faible que le seuil de coupure des membranes, et
- une capacité hydraulique limitée liée au colmatage des membranes par la matière retenue durant la filtration (appelée gâteau de filtration), en particulier lors du traitement d'eaux contenant de fortes concentrations de matières en suspension ou de matières organiques.

Au même titre que la filtration sur média granulaire, la filtration membranaire d'ultrafiltration et de microfiltration voit ses performances augmentées lorsqu'elle est précédée d'une étape de prétraitement

JP 2005 046684 décrit un bioréacteur à membrane pour le traitement d'effluents liquides contenant des matières organiques solubles. Des moyens d'aération sont prévus en partie basse dé la zone de traitement pour créer de grosses bulles d'air et/ou d'oxygène pour oxygéner les bactéries utilisées. Ces bulles vont se répandre dans tout le bioréacteur et provoquer une agitation qui ne permet pas de créer une zone de flottation.

L'association d'un traitement de coagulation / décantation et de filtration sur membrane est connue depuis plusieurs années et fait déjà l'objet de nombreuses réalisations industrielles (San Antonio, Texas ; Rivière Capot, Martinique). Cette association a démontré son intérêt en terme d'amélioration de l'élimination des matières dissoutes, qui peuvent faire l'objet d'une coagulation, et d'amélioration des performances de filtration sur membrane.

Le couplage des deux étapes de clarification que sont la flottation à air dissous et la filtration membranaire sont également bien connues, aussi bien à l'échelle des études pilote que des réalisations industrielles (San Joakim). Les filières comprennent ainsi une étape de flottation à air dissous, suivie d'une étape de filtration sur membrane. Chaque procédé est géré indépendamment et il n'existe pas de réelle optimisation des possibilités nées de l'association de ces deux technologies.

Il y a eu plusieurs tentatives d'association des deux procédés en immergeant les membranes directement dans la zone de flottation. Dans les dispositif existants, les membranes se trouvent en dessous du gâteau d'eau flottée issue de la flottation. Connaissant l'hydraulique et le comportement d'une flottation à air dissous, l'homme de l'art identifie immédiatement les limites de ce type d'agencement. La séparation des micro bulles de l'eau clarifiée n'étant pas terminée à l'entrée des membranes de par la géométrie de l'ouvrage, un colmatage est généré par accumulation de micro bulles dans les modules de filtration. Le seul moyen de limiter ce phénomène est alors d'augmenter la hauteur d'eau au dessus de l'étage de membrane, ce qui entraîne des hauteurs d'ouvrage élevées.

De plus, le positionnement des membranes dans la zone de flottation et sous le gâteau de boue flottée rend toute injection d'air impossible sous peine de casser ce gâteau et de remettre en suspension les matières agglomérées dans ce gâteau, augmentant la concentration en matière en suspension au voisinage des membranes, au détriment des performances des membranes de filtration.

Enfin, la régulation de cet ensemble de flottation à air dissous / filtration sur membrane est difficile, les opérations de vidange de l'ouvrage ne pouvant être réalisées qu'après élimination des boues de surface.

Il est de plus difficile de pratiquer une flottation de type turbulent qui requiert un système de contrôle et de répartition des flux, entre la flottation et les membranes.

De plus les membranes représentent une part importante du coût d'une installation, il est donc onéreux d'augmenter le nombre ou la surface de ces membranes, pour faire face à une baisse de performance de ces membranes due à la flottation.

Au vu de ces différents inconvénients et difficultés, les inventeurs ont mis au point, ce qui fait l'objet de l'invention, un dispositif et un procédé pour augmenter les vitesses de traitement des eaux et faciliter l'entretien de l'installation sans répercussion sensible sur les coûts d'exploitation.

Selon l'invention, un dispositif de clarification des eaux du type défini précédemment est caractérisé en ce que la paroi de séparation commune comprend dans sa partie inférieure une ouverture permettant un passage direct de l'eau flottée vers la zone de filtration, ce qui conduit à une alimentation des membranes en eau flottée de bas en haut aussi bien en phase de filtration qu'en phase de rétrolavage. Idéalement, le régime d'écoulement au voisinage de cette ouverture sera laminaire.

De préférence, la zone de flottation peut comporter des moyens permettant d'établir une flottation turbulente.

Plus préférentiellement, les moyens d'extraction peuvent comprendre deux déversoirs situés au-dessus de la paroi de séparation et comportant des moyens de communication avec la zone de flottation et la zone de filtration le rendant apte à recevoir indifféremment du fluide en provenance de la zone de flottation et de la zone de filtration.

Plus préférentiellement encore, la zone de filtration peut être compartimentée. Dans, ce cas, chaque compartiment peut être isolé des autres zone par une vanne à large passage.

Avantageusement, la zone de filtration peut aussi être complètement dégagée sur le dessus.

Selon un mode de réalisation préféré du dispositif selon l'invention, des déflecteurs ou ailettes peuvent être prévus au voisinage de l'ouverture dans la paroi de séparation afin de créer un régime hydraulique laminaire.

La présente invention concerne également un procédé de clarification des eaux comprenant une étape de flottation, une étape de filtration membranaire et une étape d'extraction des boues issues de l'étape de flottation, caractérisé en ce que le passage de l'eau flottée vers la zone de filtration est direct de telle sorte que l'alimentation des membranes en eau flottée soit réalisée de bas en haut aussi bien en phase de filtration qu'en phase de rétrolavage.

De préférence, le procédé peut comprendre une étape de nettoyage du dispositif utilisé pour l'extraction des boues à l'aide d'eau flottée.

Plus préférentiellement, le procédé peut comprendre une régulation des niveaux de récupération dans le collecteur d'extraction.

Avantageusement, le procédé peut comprendre une étape d'injection de réactifs complémentaires entre l'étape de flottation et l'étape de filtration.

D'autres caractéristiques et avantages de l'invention seront donnés dans les exemples qui suivent, avec référence aux dessins sur lesquels :
- la figure 1 est une vue schématique de dessus d'un dispositif selon l'invention, le flux de matière à traiter progressant de gauche à droite,
- la figure 2 est une coupe schématique longitudinale d'un dispositif similaire à celui de la figure 1 dans une phase de fonctionnement avec extraction des boues issues de la zone de flottation,
- la figure 3 est un détail de l'extraction des boues issues de la zone de flottation visible sur la figure 2,

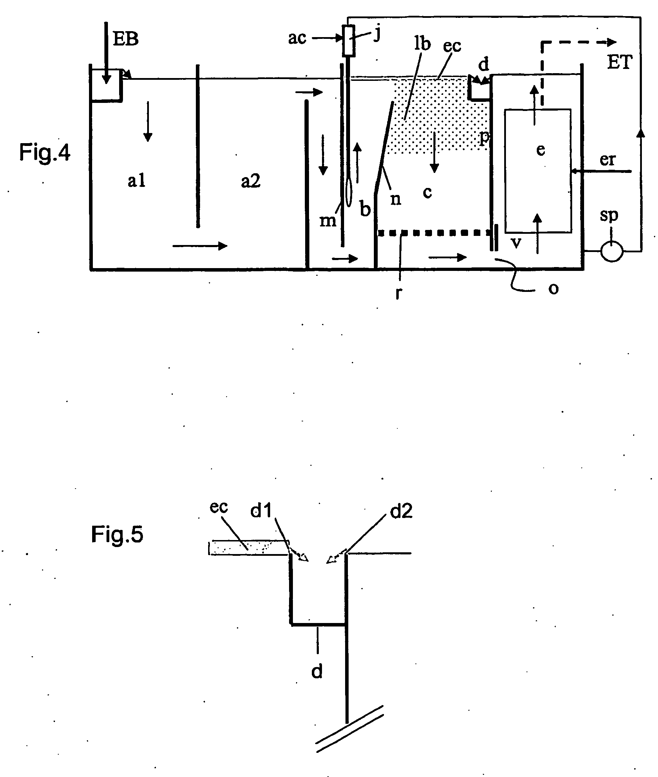

- la figure 4 est une vue similaire à celle de la figure 2 dans le cas de l'utilisation d'eau flottée pour nettoyer les moyens d'extraction des boues, et
- la figure 5 est un détail de l'utilisation d'eau flottée visible sur la figure 4.

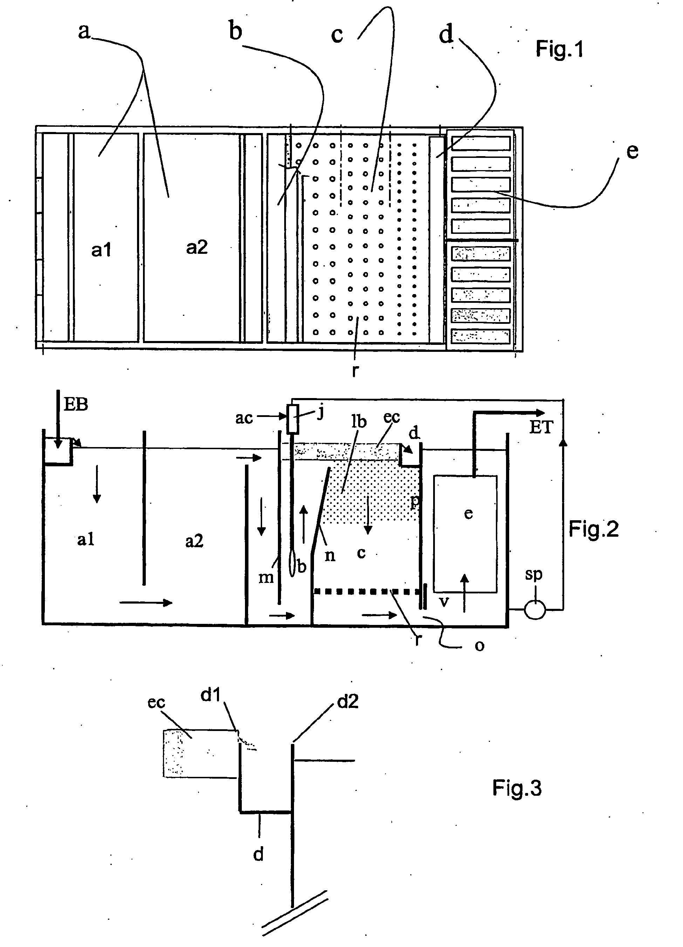

En se référant aux figures 1 et 2, on peut voir qu'un dispositif D selon l'invention comprend :
- une zone de floculation double a1/a2 dans laquelle pénètre, par l'intermédiaire d'un déversoir, l'eau brute EB à traiter,
- une zone de détente et de mélange b,
- une zone de flottation c équipée d'élément de répartition du débit r,
- une zone de collecte commune des eaux de déconcentration, de rétrolavage des membranes et de boues flottées d, et
- une zone compartimentée où sont positionnées les membranes de filtration e et d'où est ensuite extraite l'eau traitée ET.

Le temps de floculation dans la zone a est compris entre 5 et 25 minutes, typiquement entre 5 et 15 minutes. Le temps de flottation dans la zone c est compris entre 5 et 10 min. Le temps de séjour dans la zone e est compris entre 2 et 5 min.

Comme on peut le constater, le dispositif utilise les deux technologies de clarification que sont la flottation turbulente telle que décrite dans le brevet US 5 516 433, et une filtration sur membrane immergée, membranes de type microfiltration, ultrafiltration, nanofiltration ou hyperfiltration, mettant en oeuvre des géométries de membrane de type fibres creuses, spirales ou planes, de telle façon que des équipements de chacune des deux technologies soient mis en communs.

Ce type d'arrangement n'a jamais été réalisé dans l'état actuel des connaissances avec une flottation turbulente, et cela, d'autant plus que la circulation à l'intérieur du flottateur n'est pas compatible avec la circulation qui serait requise pour un bon fonctionnement des membranes.

En effet, la flottation turbulente comprend des éléments de répartition du débit r, positionnés à la base de la zone de flottation c, permettant d'assurer une répartition hydraulique homogène dans cette dernière. L'eau flottée est collectée sous ces éléments de répartition du débit. Dans la présente invention, on utilise cette eau flottée (à l'aval de la zone de flottation c) pour réaliser une hydraulique optimale d'alimentation des modules membranaires dans un régime laminaire pour ne pas détruire les flocs résiduels, et permettant d'associer une alimentation ascendante et un flux de bulles également ascendant

On désigne par j un dispositif permettant de créer un lit de microbulles Ib en partie supérieure de la zone de flottation c par injection d'air comprimé ac dans le fond de la zone de mélange b. Le dispositif j comporte un corps ou pot de mélange prolongé au niveau de sa partie inférieure par un tube d'injection vertical. L'extrémité inférieure du tube d'injection est équipée de buses de détente afin d'obtenir des bulles très fines, notamment des bulles de taille microscopique. Ces microbulles vont agglomérer les impuretés présentes dans l'eau à traiter et former une couche d'écume ec ou floc.

Avant son injection, l'air comprimé ac est mélangé avec de l'eau pompée, à la base de la zone de filtration e, par l'intermédiaire d'un système de pompage sp.

L'injection des microbulles s'effectue dans un canal formé par les parois m et n qui séparent la zone de détente et de mélange b de la zone de floculation a située en amont et de la zone de flottation c située en aval. La paroi m comporte une ouverture à la base et la paroi n comporte une ouverture dans sa partie supérieure, au niveau de la couche d'écume ec, de manière à permettre la circulation de l'eau à traiter.

Le lit de microbulles Ib est situé au dessous de la couche d'écume ec. La clarification s'effectue dans le lit de microbulles Ib.

Compte tenu des vitesses très faibles mises en jeu dans la zone qui relie la zone de flottation et les modules membranaires, les flocs issus de la zone de flottation ne subissent aucun transfert à forte dissipation d'énergie, qui pourrait être généré par exemple dans une canalisation ou par une pompe. Ces flocs conservent donc leur cohésion et leur filtrabilité malgré leur fragilité. Cela se traduit par un gain évident en terme de flux admissible sur les membranes.

Les membranes de filtration, généralement constituées de modules juxtaposés horizontalement et/ou verticalement, constituent un ensemble qui vient s'insérer dans la zone de filtration e. La filtration est réalisée soit au moyen d'une pompe, non représentée, créant une dépression et aspirant le perméat, soit au moyen d'un siphon ou tout autre organe permettant de maintenir une différence de pression entre le côté concentrat de la membrane, immergée dans l'eau flottée, et le côté perméat de la membrane, cette différence de pression assurant la force motrice permettant à l'eau de traverser la membrane.

Comme décrit ci-après, l'invention met en oeuvre des aménagements afin d'adapter le procédé de la flottation et de la filtration sur membranes :

L'eau flottée est éliminée de l'ouvrage au travers du collecteur de perméat des membranes immergées,

La sortie de boues de flottation, collectées en surface, et les sorties des eaux de déconcentration ou de rétrolavage sont réalisées en partie supérieure de l'ouvrage, en une zone commune de collecte d, ce qui facilite la construction et simplifie le fonctionnement. De plus l'apport d'eau de déconcentration et/ou de rétrolavage permet d'assister le transport des boues flottées, dont la concentration et l'état physique gênent parfois l'écoulement, d'où la nécessité d'apporter en ce point de l'eau de dilution.

Une vidange est positionnée de telle façon qu'elle concerne prioritairement la zone de filtration sur membrane e. Une vidange de la zone e où sont positionnées les membranes d'ultrafiltration et de microfiltration est nécessaire pour permettre les opérations de rétrolavage assisté par vidange, les lavages chimiques des membranes.

Dans cette configuration, les opérations de maintenance peuvent être réalisées indépendamment du fonctionnement de la zone de flottation c : la zone de filtration sur membrane e étant divisée en plusieurs compartiments, une partie de la surface membranaire installée peut être concernée par des opérations de maintenance sans que le fonctionnement du reste de l'unité n'en soit affecté.

Un second objectif de l'invention est de coupler les systèmes de régulation des procédés de flottation turbulente et de filtration membranaire.

Le débit de perméat extrait des membranes immergées doit être en adéquation avec le débit de la zone de flottation c. Pour cela, le débit de perméat est régulé en fonction du niveau d'eau à l'entrée du dispositif. En particulier, en phase de filtration, un léger sous-débit de perméat se traduira par un débordement d'eau au niveau de la collecte des boues flottées, aidant celles-ci à s'évacuer.

Lors d'un rétrolavage d'un bloc de membrane, on injecte de l'eau er tangentiellement aux membranes pour décoller les impuretés des membranes. .Le débit d'alimentation de l'appareil est maintenu constant. La fraction d'eau flottée qui ne traverse pas les membranes et qui sera récupérée dans la zone de collecte d vient assister l'eau de rétrolavage dans la déconcentration du compartiment des membranes et ce de bas en haut. L'eau sale de rétrolavage est alors évacuée par la partie supérieure de l'ouvrage. Le niveau du déversoir de sortie peut, être fixe ou équipé d'un système de réglage, adaptable en fonction du niveau de restitution désiré.

Lors d'un rétrolavage vidangé, le bloc de membranes est isolé du flottateur c par une vanne murale à large passage v, permettant la vidange sélective du bloc membrane. Le rétrolavage ainsi pratiqué permet une meilleure déconcentration des membranes, et une meilleure élimination du gâteau de filtration.

Lors d'une élimination hydraulique des boues, le débit de perméation des membranes est limité par le système de régulation, permettant une augmentation du niveau d'eau dans le dispositif, et donc une extraction des boues hydrauliquement.

Lors d'un lavage chimique, le bloc membrane en cours de lavage chimique est isolé de la flottation c par la vanne murale v,

Lors d'une vidange totale de l'ouvrage, le bloc membrane et la zone de flottation c sont vidangés simultanément.

Du fait de l'architecture du dispositif, le flux dans la zone de filtration e reste constamment dirigé vers le haut. Lors d'un rétrolavage, les particules issues des parties les plus sales des membranes, qui se trouvent en haut du fait de la vitesse quasi nulle des eaux flottées au voisinage de la surface, ne se redéposeront donc pas sur des parties plus propres.

Le floc formé dans l'étage de flottation turbulente présente deux caractéristiques : d'une part il est fragile, compte tenu de la nature même de l'eau et de l'obligation d'éviter tout surdosage de floculant qui serait nuisible à la filtration en aval sur membranes ; d'autre part, ayant « maturé » dans une zone à forte concentration de particules (le lit de bulles), il est plus facilement filtrable et le gâteau formé à la surface des membranes est plus perméable à l'eau.

Le floc filtré sur la membrane de filtration présente à ce stade du procédé une structure préservée de toute modification liée à un pompage ou à une chute d'eau ou tout autre moyen de collecte et de transfert hydraulique. Le temps de passage du floc entre la zone de séparation du flottateur et la filtration sur membrane est compris entre 10 et 60 secondes, typiquement 30 secondes.

Le pouvoir colmatant de ce floc résiduel, préservé physiquement, est diminué par rapport à un floc ayant subi une modification de structure, généralement une défloculation lors du passage dans les organes et ouvrages de transfert. Ce floc à faible pouvoir colmatant est retenu par la membrane de filtration de par le seuil de coupure de cette dernière. Ce floc à faible pouvoir colmatant forme alors un gâteau de filtration, correspondant à l'accumulation de particules en surface de la membrane de filtration, d'une porosité augmentée, caractérisé par une résistance spécifique plus faible au passage d'un fluide tel que l'eau, et permettant donc l'application de flux de filtration plus élevés, généralement de +5 à +25%, typiquement de +10 à +20%.

L'agencement de la zone de flottation c et de la zone de filtration e sur membrane permet une optimisation du procédé de filtration par la possibilité d'assurer un conditionnement intermédiaire de l'eau au moyen de coagulant, CAP, polymère, acide ou base :

Dans le cas d'une coagulation simple, le taux de traitement en coagulant peut être adapté à l'optimum du jar test pour favoriser les caractéristiques de flottabilité de floc. La flottation est alors réalisée à l'optimum de ses performances. Par la suite, l'addition d'une nouvelle dose de coagulant entre la zone de flottation c et la zone de filtration permet de modifier les caractéristiques des flocs, les rendant plus aptes à la filtration sur membrane (résistance du gâteau plus faible à l'écoulement de l'eau, décollement du gâteau plus aisée durant les rétrolavages). Souvent sans impact sur la qualité du perméat obtenu, cette seconde injection de coagulant permet de mieux maîtriser la filtration sur membrane, et d'augmenter les flux de filtration tout en diminuant la fréquence des lavages chimiques.

Dans le cas d'une coagulation à deux pH, l'avantage recherché est une meilleure élimination de la matière organique. Il est bien connu de l'homme de l'art que la coagulation des acides humiques et fulviques, principaux composants de la matière organique naturelle dissoute, est plus efficace en milieu acide. La principale limite de pH est liée à l'augmentation de la solubilité des ions Fe et Al responsables de la coagulation. L'invention permet la réalisation d'une coagulation à deux pH, pH acide dans la zone de flottation, permettant une élimination optimale de la matière organique, et correction de pH immédiatement en amont des membranes de filtration pour précipiter le résiduel de coagulant, afin qu'il soit retenu par la membrane de filtration.

Dans le cas d'une correction finale de pH afin de rendre l'eau à l'équilibre calco-carbonique, après l'étage de filtration, cette correction finale peut être réalisée par ajout de soude (mais cette solution entraîne une augmentation importante de la concentration en ions sodium de l'eau traitée, et il s'agit d'un réactif coûteux) ou par injection d'eau de chaux, ce dernier cas implique la construction d'un saturateur à chaux, coûteux et difficile d'emploi. La correction partielle du pH entre zone de flottation c et membrane par ajout de lait de chaux permet d'envisager un dosage de lait de chaux car les membranes sont susceptibles de retenir les incuits de la chaux, alors que l'ion calcium va accroître la filtrabilité du gâteau.

Des essais pilotes ont été conduits afin de démontrer l'efficacité de ce nouveau procédé de clarification des eaux, couplant une flottation à air dissous turbulente et une filtration sur membranes immergées.

### Exemple 1 : Clarification d'une eau de surface

La qualité de l'eau alimentant l'unité pilote est décrite dans le tableau suivant. L'eau provient d'une retenue, caractérisée par une faible turbidité, par la présence de matière organique (COT-UV) a des concentrations élevées, et par des blooms d'algues, ces dernières pouvant atteindre des concentrations de 50 000 algues/mL.

**Tableau 1-1**

| Paramètres | Eau brute | Eau flottée | Eau ultrafiltrée |
|---|---|---|---|
| Température | 1-10°C | 1-10°C | 1-10°C |
| Turbidité | 0.5-2 NTU | 0.4-2.8 NTU | <0.1 NTU |
| Carbone organique total | 5-8 mg/L | 2.6-4.3 mg/L | 2.3-4.0 mg/L |
| Absorbance UV | 8-12/m | 6-8/m | 4.5-5/m |
| Algues | 2 940-52 800 algues/mL | 523-2210 algues/mL | 0 algues/mL |

Les performances hydrauliques sont détaillées dans le tableau suivant :

**Tableau 1-2**

| Type de fonctionnement | Performances de la flottation* | Performances de la filtration sur membrane simple** | Performances de la filtration sur membrane assistée d'un conditionnement intermédiaire** |
|---|---|---|---|
| Filtration directe d'eau de surface | - | 25-30 L/h/m² | - |
| Flottation turbulente puis membrane | 20-30 m/h | 35-45 L/h/m² | 55-60 L/h/m² |
| Invention : couplage Flottation turbulente + membranes | 25-45 m/h | 40-60 L/h/m² | 60-70 L/h/m² |

| | | | |
|---|---|---|---|
| * Vitesse de flottation en m3/m²/h ** Flux de filtration en L/h/m² à température de filtration | | | |

### Exemple 2 : Prétraitement d'eau de mer en prise ouverte

La qualité de l'eau alimentant l'unité pilote est décrite dans le tableau suivant :

**Tableau 2-1**

| Paramètres | Eau brute | Eau flottée | Eau ultrafiltrée |
|---|---|---|---|
| Température | 30-36°C | 32-37°C, | 32-38°C°C |
| Turbidité | 0.2-10.5 NTU | 0.5-2.2 NTU | <0.1 NTU |
| Indice de colmatage (SDI) | 10-28 | - | 1,4-3,6 |
| Absorbance UV | 0,8-1,2/m | 0,6-0,9/m | 0,5-0,8/m |
| Conductivité | 55-56 mS/cm | 55-56 mS/cm | 55-56 mS/cm |

Les performances hydrauliques sont détaillées dans le tableau suivant :

**Tableau 2-2**

| Type de fonctionnement | Performances de la flottation* | Performances de la filtration sur membrane ** |
|---|---|---|
| Filtration directe d'eau de surface | - | 20-30 L/h/m² |
| Flottation turbulente puis membrane | 25-35 m/h | 45-55 L/h/m² |
| Invention : couplage Flottation turbulente + membranes | 30-45 m/h | 50-65 L/h/m² |

| | | |
|---|---|---|
| * Vitesse de flottation en m3/m²/h **Flux de filtration en L/h/m² à température de filtration | | |

### Exemple 3 :

La qualité de l'eau alimentant l'unité pilote est décrite dans le tableau suivant : cette étude traite de l'application de l'innovation au traitement tertiaire d'eau résiduaire municipale.

**Tableau 3-1**

| Paramètres | Eau brute | Eau flottée | Eau ultrafiltrée |
|---|---|---|---|
| DBO5 | 22 mg/l | 16 mg/l | 11 mg/l |
| DCO | 54 mh/l | 39 mg/l | 30 mg/l |
| matières en suspension | 18 mg/l | 9 mg/l | 0 mg/l |
| Transmittance | 55% | 70% | 80% |
| P-PO4 | 3 mg/l | 1 mg/l | < 0.1 mg/l |

Les performances hydrauliques sont détaillées dans le tableau suivant.

**Tableau 3-2**

| Type de fonctionnement | Performances de la flottation* | Performances de la filtration sur membrane** |
|---|---|---|
| Filtration directe d'eau de surface | - | 15-25 L/h/m² |
| Flottation turbulente puis membrane | 20-25 m/h | 25-40 L/h/m² |
| Invention : couplage Flottation turbulente + membranes | 25-45 m/h | 40-65 L/h/m² |

| | | |
|---|---|---|
| * Vitesse de flottation en m3/m²/h ** Flux de filtration en L/h/m² à température de filtration | | |

En conclusion, le dispositif selon l'invention permet donc d'obtenir :
- une diminution de la surface au sol et du coût des installations par la mise en commun de structures et d'équipements,
- une gestion commune de différentes étapes du procédé, aboutissant à une régulation simplifiée, et
- une amélioration des performances hydraulique de l'étage de flottation et de filtration sur membrane : une amélioration de l'ensemble du procédé de clarification liée aux conditions hydrauliques spécifiques générées par cette association, permettant une réduction de la surface membranaire nécessaire.

Dans les trois cas détaillés ci-dessus, les études pilotes ont permis de démontrer la compacité du système par rapport à une filtration directe sur membrane, et par rapport à la simple juxtaposition d'un ouvrage de flottation à air dissous et d'une filtration sur membrane. Cette compacité est liée à l'emploi d'équipement commun aux deux procédés, et à l'amélioration des performances de chacune des étapes de traitement par rapport aux systèmes simplement juxtaposés.

## Revendications

1. Dispositif de clarification des eaux comprenant une zone de flottation (c), une zone de filtration membranaire (e) et des moyens d'extraction (d), la zone de flottation (c) et la zone de filtration membranaire (e) possédant une paroi de séparation commune (p), **caractérisé en ce que** :
- une paroi (n) sépare une zone de mélange (b) de la zone de flottation (c),
- des éléments de répartition du débit (r) sont positionnés à la base de la zone de flottation (c)
- la paroi de séparation commune (p) comprend dans sa partie inférieure une ouverture (o) permettant un passage direct de l'eau flottée, collectée sous les éléments de répartition du débit, vers la zone de filtration (e), ce qui conduit à une alimentation des membranes en eau flottée de bas en haut aussi bien en phase de filtration qu'en phase de rétrolavage.

2. Dispositif de clarification des eaux selon la revendication 1, **caractérisé en ce que** les moyens d'extraction (d) comprennent deux déversoirs (d1, d2) situés au dessus de la paroi de séparation (p) et comportant des moyens de communication avec la zone de flottation (c) et la zone de filtration (e) les rendant aptes à recevoir indifféremment du fluide en provenance de la zone de flottation (c) et de la zone de filtration (e).

3. Dispositif de clarification des eaux selon la revendication 1 ou 2, **caractérisé en ce que** la zone de filtration (e) est compartimentée.

4. Dispositif de clarification des eaux selon la revendication 3, **caractérisé en ce que** chaque compartiment est isolable des autres zones, par une vanne à large passage (v).

5. Dispositif de clarification des eaux selon l'une quelconque des revendications 1 à 4, **caractérisé en ce que** la zone de filtration (e) est complètement dégagée sur le dessus.

6. Dispositif de clarification des eaux selon l'une quelconque des revendication 1 à 5, **caractérisé en ce que** des déflecteurs ou ailettes sont prévus au voisinage de l'ouverture dans la paroi de séparation (P), afin de créer un régime hydraulique laminaire.

7. Procédé de clarification des eaux comprenant une étape de flottation, une étape de filtration membranaire et une étape d'extraction des boues issues de l'étape de flottation, **caractérisé en ce que** :
- on effectue une injection d'air comprimé dans le fond d'une zone de mélange (b) séparée par une paroi (n) de la zone de flottation (c),
- une répartition hydraulique homogène est assurée dans la zone de flottation (c) par des éléments de répartition du débit (r) positionnés à la base de la zone de flottation (c), et l'eau flottée est collectée sous ces éléments de répartition du débit, cette eau flottée étant utilisée à l'aval de la zone de flottation (c) pour réaliser une alimentation des modules membranaires,
- le passage de l'eau flottée vers la zone de filtration est assuré de telle sorte que l'alimentation des membranes en eau flottée soit réalisée de bas en haut aussi bien en phase de filtration qu'en phase de rétrolavage.

8. Procédé de clarification des eaux suivant la revendication 7, **caractérisé en ce qu'**il comprend une étape de nettoyage du dispositif utilisé pour l'extraction des boues à l'aide d'eau flottée, provenant de la zone de filtration pendant le retrolavage des membranes.

9. Procédé de clarification des eaux suivant l'une des revendications 7 ou 8, **caractérisé en ce qu'**il comprend une régulation des niveaux de récupération au moyen d'un seuil variable dans le collecteur d'extraction.

10. Procédé de clarification des eaux suivant l'une quelconque des revendications 7 à 9, **caractérisé en ce qu'**il comprend une étape d'injection de réactifs complémentaires entre l'étape de flottation et l'étape de filtration.

11. Utilisation du dispositif selon l'une quelconque des revendications 1 à 6 pour la clarification de l'eau de mer, de l'eau saumâtre, de l'eau de surface ou des eaux usées traitées, d'origine municipale ou industrielle.

12. Application du procédé selon l'une quelconque des revendications 7 à 10, à la clarification de l'eau de mer, de l'eau saumâtre, de l'eau de surface ou des eaux usées traitées, d'origine municipale ou industrielle.

## Claims

1. A water clarification device comprising a flotation zone (c), a membrane filtration zone (e) and extraction means (d), the flotation zone (c) and the membrane filtration zone (e) having a common partition (p), **characterized in that**:
- a wall (n) separates a mixing zone (b) from the flotation zone (c),
- elements for distributing the flow (r) are positioned at the bottom of the flotation zone (c),
- the common partition (p) comprises an opening (o) in its lower part allowing a direct flow of the flotation water, which is collected under the elements for distributing the flow, toward the filtration zone (e), which results in the membranes being fed with flotation water from the bottom up both in the filtration phase and in the backwashing phase.

2. The water clarification device as claimed in claim 1, **characterized in that** the extraction means (d) comprise two overflows (d1, d2) located above the partition (p) and comprising means of communicating with the flotation zone (c) and the filtration zone (e) making it capable of receiving fluid originating from either the flotation zone (c) or from the filtration zone (e).

3. The water clarification device as claimed in either of claim 1 and 2, **characterized in that** the filtration zone (e) is compartmentalized.

4. The water clarification device as claimed in claim 3, **characterized in that** each compartment can be isolated from the other zones, by a wide-opening valve (v).

5. The water clarification device as claimed in any one of claims 1 to 4, **characterized in that** the filtration zone (e) is completely open at the top.

6. The water clarification device as claimed in any one of claims 1 to 5, **characterized in that** baffles or fins are provided in the vicinity of the opening in the partition (p) in order to create a hydraulic laminar regime.

7. A water clarification process comprising a flotation step, a membrane filtration step, and a step of extracting sludge derived from the flotation step, **characterized in that**:
- an injection of compressed air is carried out into the bottom of a mixing zone (b) separated by a wall (n) from the flotation zone (c),
- a homogeneous hydraulic distribution is ensured in the flotation zone (c) by elements for distributing the flow (r) positioned at the bottom of the flotation zone (c), and the flotation water is collected under those elements for distributing the flow, this flotation water being used downstream of the flotation zone (c) for feeding the membrane modules,
- the flow of flotation water toward the filtration zone is such that the feed of the membranes with flotation water is carried out from the bottom up both in the filtration phase and in the backwashing phase.

8. The water clarification process as claimed in claim 7, **characterized in that** it comprises a step of cleaning the device used for extracting sludge using flotation water, coming from the filtration zone during the backwashing of the membranes.

9. The water clarification process as claimed in either of claims 7 and 8, **characterized in that** it comprises control of the recovery levels by means of a variable sill in the extraction collector.

10. The water clarification process as claimed in any one of claims 7 to 9, **characterized in that** it comprises a step of injecting additional reagents between the flotation step and the filtration step.

11. The use of the device as claimed in any one of claims 1 to 6 for clarifying seawater, brackish water, surface water or treated wastewater, of municipal or industrial origin.

12. An application of the process as claimed in any one of claims 7 to 10, for clarifying seawater, brackish water, surface water or treated wastewater, of municipal or industrial origin.

## Patentansprüche

1. Vorrichtung zum Klären von Wasser, mit einer Flotationszone (c), einer Membranfiltrationszone (e) und Extraktionseinrichtungen (d), wobei die Flotationszone (c) und die Membranfiltrationszone (e) eine gemeinsame Trennwand (p) aufweisen, **dadurch gekennzeichnet, dass**:
- eine Wand (n) eine Mischzone (b) von der Flotationszone (c) trennt,
- Durchflussverteilungselemente (r) an der Basis der Flotationszone (c) angeordnet sind,
- die gemeinsame Trennwand (p) in ihrem unteren Teil eine Öffnung (o) aufweist, welche einen direkten Durchgang des unter den Durchflussverteilungselementen gesammelten Flotatwassers in die Filtrationszone (c) ermöglicht, wodurch eine von unten nach oben verlaufende Versorgung der Membranen mit Flotatwasser sowohl in der Filtrationsphase als auch in der Rückspülphase erreicht ist.

2. Vorrichtung zum Klären von Wasser nach Anspruch 1, **dadurch gekennzeichnet, dass** die Extraktionseinrichtungen (d) zwei Überläufe (d1, d2) aufweist, welche über der Trennwand (p) angeordnet sind und Verbindungseinrichtungen zu der Flotationszone (c) und der Filtrationszone (e) aufweisen, welche, es ihnen ermöglichen, gleichermaßen aus der Flotationszone (c) und aus der Filtrationszone (e) kommendes Wasser aufzunehmen.

3. Vorrichtung zum Klären von Wasser nach Anspruch 1 oder 2, **dadurch gekennzeichnet, dass** die Filtrationszone (e) in Abteilungen unterteilt ist.

4. Vorrichtung zum Klären von Wasser nach Anspruch 3, **dadurch gekennzeichnet, dass** jede Abteilung von den anderen Zonen durch einen Schieber (v) mit großem Durchlass isolierbar ist.

5. Vorrichtung zum Klären von Wasser nach einem der Ansprüche 1 bis 4, **dadurch gekennzeichnet, dass** die Filtrationszone (e) auf der Oberseite vollkommen freiliegt.

6. Vorrichtung zum Klären von Wasser nach einem der Ansprüche 1 bis 5, **dadurch gekennzeichnet, dass** Deflektoren oder Flügel nahe der Öffnung der Trennwand (p) vorgesehen sind, um einen laminaren hydraulischen Zustand zu erzeugen.

7. Verfahren zur Klärung von Wasser mit einem Flotationsschritt, einem Membranfiltrationsschritt und einem Schritt des Extrahierens von aus dem Flotationsschritt stammenden Schlämmen, **dadurch gekennzeichnet, dass**:
- Druckluft in den Boden einer durch eine Wand (n) von der Flotationszone (c) getrennte Mischzone (b) geblasen wird,
- eine homogene hydraulische Verteilung in der Flotationszone (c) durch Durchlassverteilungselemente (r) gewährleistet wird, welche an der Basis der Flotationszone (c) angeordnet sind, und das Flotatwasser unter diesen Durchlassverteilungselementen gesammelt wird, wobei das Flotatwasser stromabwärts der Flotationszone (c) verwendet wird, um die Versorgung der Membranmodule zu gewährleisten,
- der Durchfluss des Flotatwassers in Richtung der Filtrationszone derart gewährleistet wird, dass die Versorgung der Membranen mit Flotatwasser sowohl in der Filtrationsphase als auch in der Rückspülphase von unten nach oben erfolgt.

8. Verfahren zum Klären von Wasser nach Anspruch 7, **dadurch gekennzeichnet, dass** es den Schritt des Reinigens der zum Extrahieren der Schlämme verwendeten Vorrichtung mittels Flotatwassers aufweist, welches während des Rückspülens der Membranen aus der Flotationszone kommt.

9. Verfahren zum Klären von Wasser nach einem der Ansprüche 7 oder 8, **dadurch gekennzeichnet, dass** es eine Regelung des Rückgewinnungsgrades mittels einer variablen Schwelle in dem Extraktionssammler aufweist.

10. Verfahren zum Klären von Wasser nach einem der Ansprüche 7 bis 9, **dadurch gekennzeichnet, dass** es einen Schritt des Einspritzens von zusätzlichen Reaktionsmitteln zwischen dem Flotationsschritt und dem Filtrationsschritt aufweist.

11. Verwendung der Vorrichtung nach einem der Ansprüche 1 bis 6 zur Klärung von Meerwasser, Brackwasser, Oberflächenwasser oder behandelter städtischer oder industrieller Abwässer.

12. Anwendung des Verfahrens nach einem der Ansprüche 7 bis 10 zur Klärung von Meerwasser, Brackwasser, Oberflächenwasser oder behandelter städtischer oder industrieller Abwässer.
